# EUROPÄISCHE PATENTSCHRIFT

(11) **EP 1 051 356 B1**
(45) Veröffentlichungstag und Bekanntmachung des Hinweises auf die Patenterteilung: **11.09.2002**
(21) Anmeldenummer: 99904757.4
(22) Anmeldetag: 09.01.1999
(51) Int. Cl.: C02F 1/32, H01R 33/08, H01R 13/66, E03C 1/04, F21V 25/04

(54) **EINRICHTUNG ZUM ENTKEIMEN VON WASSER**
DEVICE FOR DEGERMINATING WATER
DISPOSITIF POUR STERILISER DE L'EAU

(30) Priorität: 30.01.1998 DE 19803538
(43) Veröffentlichungstag der Anmeldung: 15.11.2000
(73) Patentinhaber: HANSA METALLWERKE AG, 70567 Stuttgart (DE)
(72) Erfinder: KUNKEL, Horst, D-70499 Stuttgart (DE)
(74) Vertreter: Ostertag, Ulrich, Dr.
(86) Internationale Anmeldenummer: EP9900090
(87) Internationale Veröffentlichungsnummer: WO99038804

(56) Entgegenhaltungen:
- FR-A- 2 698 734
- US-A- 3 551 091
- US-A- 4 825 083
- US-A- 5 422 487

## Beschreibung

Die Erfindung betrifft eine Einrichtung zum Entkeimen von Wasser mit
a) einem Gehäuse, welches einen Einlaß und einen Auslaß für das Wasser und einen abnehmbaren Gehäuseabschnitt aufweist; und
b) einer UV-Strahlungsquelle, die innerhalb des Gehäuses angeordnet und deren Strahlung auf das durchströmende Wasser gerichtet ist und welche in ihrem Sockelbereich elektrische Anschlußmittel zu ihrer Stromversorgung aufweist;
   wobei
c) das Gehäuse einen stationären Anschlußsockel umfaßt, welcher zu den elektrischen Anschlußmitteln der UV-Strahlungsquelle komplementäre Anschlußmittel aufweist, die mit einer externen Stromquelle vebindbar sind;
d) die elektrischen Anschlußmittel im Sockelbereich der UV-Strahlungsquelle und die elektrischen Anschlußmittel im stationären Anschlußsockel in der Funktionsstellung der UV-Strahlungsquelle zueinander eng benachbart sind;

In den letzten Jahren sind die Gefahren, die von mit Mikroorganismen, insbesondere Bakterien, Amöben oder anderen Einzellern, verunreinigtem Wasser im Sanitärbereich ausgehen, zunehmend deutlicher geworden. Der Entkeimung von Wasser wird daher nicht nur z.B. in Krankenhäusern, sondern auch immer mehr im häuslichen Bereich eine erhöhte Bedeutung beigemessen. In diesem Zusammenhang wurde von Versuchen berichtet, strömendes Wasser durch Bestrahlung mit UV-Licht zu entkeimen, dessen Wellenlänge geeignet ist, im Wasser mitgeführte Mikroorganismen abzutöten.

Die verwendete UV-Strahlungsquelle hat dabei eine sehr hohe Intensität, um die sich ja nur für relativ kurze Zeit in ihrem Strahlungsbereich aufhaltenden Mikroorganismen sicher abtöten zu können. Aus diesem Grunde ist es sehr wichtig, sicherzustellen, daß keine UV-Strahlung direkt zum Benutzer gelangen kann, wenn dieser z.B. zu Wartungs- oder Reparaturzwecken den Gehäuseabschnitt abnimmt. US-A-3 551 091 offenbart eine Einrichtung zum Entkeimen von Wasser mit einem Gehäuse, welches zwei abnehmbare Gehäuseabschnitte aufweist, sowie einer UV-Strahlungsquelle, welche an beiden Stirnseiten elektrische Anschlußmittel aufweist. Der stationäre Anschlußsockel weist die UV-Strahlungsquelle nebst deren elektrische Anschlußmittel auf, welche über komplementäre Anschlußmittel in einer des beiden abnehmbaren Gehäuseabschnitte mit eines externen Stromquelle verbindbar sind. Die früheren Anmeldungen WO-A-99 38805 bzw. WO-A-99 38806, vom gleichen Veröffentlichung datum wie die vorliegende Anmeldung, beanspruchen die Priorität vom 28.01.1998. Sie offenbaren ähnliche Wasserentkeimungseinrichtungen, als Auslauf armaturen ausgebildet, worin die Luftspudelanordung UV-durchlässig bzw. ein Teil des Gehäuses zur Funktionskontrolle der Lampe licht durchlässig ist. Aufgabe der vorliegenden Erfindung ist es daher, eine Einrichtung der eingangs genannten Art derart auszugestalten, daß der Benutzer vor einer direkten Bestrahlung mit UV-Licht durch die UV-Strahlungsquelle in jedem Fall geschützt ist.

Diese Aufgabe wird erfindungsgemäß dadurch gelöst, daß
e) eine Einrichtung vorgesehen ist, welche bei einer Relativbewegung des abnehmbaren Gehäuseabschnittes vom stationären Anschlußsockel weg eine Relativbewegung des Sockelbereiches der UV-Strahlungsquelle gegenüber dem stationären Anschlußsockel bewirkt und so die Stromzufuhr zur UV-Strahlungsquelle unterbricht.

Erfindungsgemäß wird also die bei jedem Abnehmvorgang des Gehäuseabschnitts notwendige Relativbewegung dazu verwendet, die UV-Strahlungsquelle von der externen Stromversorgung zu trennen, so daß diese sofort erlischt und keine möglicherweise schädliche UV-Strahlung mehr auf den Benutzer abstrahlen kann. Diese "Sicherheitseinrichtung" kommt ohne zusätzliche stromführende Teile im Bereich zwischen stationärem und abnehmbarem Gehäuseabschnitt aus, welche notwendig wären, wenn dort z.B. ein Kontaktschalter angeordnet wäre, der gegebenenfalls die Stromzufuhr zur UV-Lampe unterbräche.

Vorteilhafte Weiterbildungen der Erfindung sind in Unteransprüchen angegeben:

Bei der Weiterbildung gemäß Anspruch 2 umfaßt die Einrichtung eine Druckfeder, welche sich einerseits am Sockelbereich der UV-Strahlungsquelle und andererseits an einem stationären Gehäuseteil abstützt, wobei die UV-Strahlungsquelle sich in der Funktionsstellung mit ihrem von der Druckfeder abgewandten Ende am Gehäusemantel abstützt. Bei dieser Weiterbildung der Erfindung ist die Einrichtung, welche die Relativbewegung des Sockelbereiches der UV-Strahlungsquelle gegenüber dem stationären Anschlußsockel bewirkt, besonders einfach ausgeführt. Eine Druckfeder ist äußerst preiswert und stellt die notwendige "Ausstoßkraft" zuverlässig und über einen langen Zeitraum zur Verfügung.

Stützt sich die Druckfeder mit einem Ende an einem Zapfen ab und sind beide in der Funktionsstellung der UV-Strahlungsquelle in einer Bohrung im Sockelbereich der UV-Strahlungsquelle oder im stationären Anschlußsockel angeordnet, wird das Einsetzen des Sockelbereiches der UV-Strahlungsquelle auf oder in den stationären Anschlußsockel vereinfacht, indem die Druckfeder sicher gehalten und geführt ist.

Dabei ist besonders vorteilhaft, wenn gemäß Anspruch 4 der Zapfen einen koaxialen Durchgangskanal aufweist, durch den beim Einführen im stationären Anschlußsockel gegebenenfalls vorhandenes Wasser entweichen kann.

Eine besonders sichere Führung des Sockelbereiches der UV-Strahlungsquelle gegenüber dem stationären Anschlußsockel wird dann bewirkt, wenn der Zapfen am stationären Anschlußsockel (Anspruch 5) oder am Sockelbereich der UV-Strahlungsquelle (Anspruch 6) angeformt ist.

In Anspruch 7 ist eine alternative Ausführung einer die Relativbewegung des Sockelbereiches der UV-Strahlungsquelle gegenüber dem stationären Anschlußsockel bewirkenden Einrichtung angegeben. Danach umfaßt diese Einrichtung eine Klemmeinrichtung, welche einerseits mit der UV-Strahlungsquelle und andererseits mit dem beweglichen Gehäusemantel zusammenarbeitet, wobei die Haltekraft zwischen Klemmeinrichtung und UV-Strahlungsquelle bzw. Gehäusemantel größer ist als jene zwischen den elektrischen Anschlußmitteln. Anstelle einer quasi als "Ausstoßeinrichtung" arbeitenden Druckfeder wird bei dieser Weiterbildung der Erfindung die UV-Strahlungsquelle durch eine Klemmeinrichtung mit dem abnehmbaren Gehäuseabschnitt gekoppelt, so daß sie gemeinsam mit diesem vom stationären Anschlußsockel wegbewegt und hierdurch die Stromzufuhr zur UV-Strahlungsquelle unterbrochen wird. Diese Einrichtung hat den Vorteil, daß sie an einer beliebigen Stelle zwischen UV-Strahlungsquelle und abnehmbaren Gehäuseabschnitt angeordnet werden kann.

Besonders bevorzugt ist dabei, wenn gemäß Anspruch 8 die Klemmeinrichtung einen Klemmring umfaßt, welcher mit seiner Basis mit der UV-Strahlungsquelle im Preßsitz zusammenarbeitet und mit radialen Rastabschnitten gegen den abnehmbaren Gehäuseabschnitt verspannt ist. Ein derartiger Klemmring ist sicher und einfach und preiswert herzustellen.

Für die Funktionsfähigkeit der erfindungsgemäßen Einrichtung ist besonders wichtig, daß die elektrischen Anschlußmittel im Sockelbereich der UV-Strahlungsquelle sich leicht von den elektrischen Anschlußmitteln im stationären Anschlußsockel lösen lassen, wenn der Gehäuseabschnitt abgenommen wird und sich die erfindungsgemäße Relativbewegung des Sockelbereiches der UV-Strahlungsquelle gegenüber dem stationären Anschlußsockel einstellen soll. Besonders bevorzugt ist daher, wenn gemäß Anspruch 9 die elektrischen Anschlußmittel im stationären Anschlußsockel des Gehäuses als Primärwicklung und die elektrischen Anschlußmittel am Sockelbereich der UV-Strahlungsquelle als Sekundärwicklung einer Induktionsanordnung ausgebildet sind. In diesem Fall ist kein direkter mechanischer Kontakt zwischen den stromführenden Elementen der UV-Strahlungsquelle und den mit der externen Stromquelle verbundenen elektrischen Anschlußmitteln im stationären Anschlußsockel vorhanden, so daß die Kraft, mit welcher die UV-Strahlungsquelle im stationären Anschlußsockel gehalten wird, äußerst gering ist.

Die gerade genannte "haltekraftfreie" Kontaktierung zwischen UV-Strahlungsquelle und stationärem Anschlußsockel kann darüber hinaus auch noch eine Führung für den Sockelbereich der UV-Strahlungsquelle bieten, wenn gemäß Anspruch 10 die einen elektrischen Anschlußmittel eine Ausnehmung aufweisen und die entsprechende Wicklung um diese Ausnehmung herum angeordnet ist, und die hierzu komplementären Anschlußmittel in der Funktionsstellung der UV-Strahlungsquelle mit ihrer Wicklung in die Ausnehmung eingeführt sind.

Gemäß Anspruch 11 sind die Wicklungen verkapselt. Hierdurch kann auf eine aufwendige Abdichtung in diesem Bereich verzichtet werden.

Eine relativ preiswerte und handelsüblich erhältliche Ausbildung der elektrischen Verbindung zwischen UV-Strahlungsquelle und stationärem Anschlußsockel ist in Anspruch 12 angegeben. Danach sind die einen elektrischen Anschlußmittel als Steckbuchsen und die hierzu komplementären elektrischen Anschlußmittel als Kontaktstifte ausgebildet, welche im eingebauten Zustand mit den Steckbuchsen zusammenarbeiten.

Dabei wird durch die Weiterbildung gemäß Anspruch 13, wonach die Steckbuchsen Federabschnitte aufweisen, welche im eingebauten Zustand gegen die Kontaktstifte drücken, eine sichere Kontaktierung und eine einstellbare Haltekraft der Kontaktstifte in den Steckbuchsen ermöglicht.

Da die erfindungsgemäße, die Relativbewegung der UV-Strahlungsquelle bewirkende Einrichtung in irgendeiner Weise den abnehmbaren Gehäuseabschnitt mit der UV-Strahlungsquelle koppelt, empfiehlt es sich, deren Stabilität und somit deren Bruchsicherheit dadurch zu erhöhen, daß die UV-Strahlungsquelle eine UV-Lampe umfaßt, welche von einem für UVC-Strahlung durchlässigen Glaskolben umgeben ist, entsprechend Anspruch 14.

Eine besonders robuste UV-Strahlungsquelle wird durch die Weiterbildung der Erfindung gemäß Anspruch 15 geschaffen, wonach der Glaskolben mit dem Sockelbereich der UV-Strahlungsquelle vergossen ist.

Besonders sinnvoll ist es, wenn die erfindungsgemäße Einrichtung zum Entkeimen von Wasser in eine Sanitärarmatur integriert ist. Dies kann gemäß Anspruch 16 z.B. dadurch verwirklicht werden, daß das Gehäuse das Auslaufgehäuse einer sanitären Auslaufarmatur ist.

Ausführungsbeispiele der Erfindung werden nachfolgend anhand der Zeichnung näher erläutert; es zeigen
- Figur 1:: einen Axialschnitt durch einen Wannenauslauf mit einer Einrichtung zum Entkeimen von Wasser;
- Figur 2:: eine Teilvergrößerung aus Figur 1;
- Figur 3:: eine Ansicht ähnlich Figur 2, bei welcher der Anschlußsockel in einer versetzten Position dargestellt ist;
- Figur 4:: eine Ansicht ähnlich Figur 2 eines zweiten Ausführungsbeispieles eines Wannenauslaufs;
- Figur 5:: einen axialen Schnitt durch den Auslaufkopf eines dritten Ausführungsbeispieles eines Wannenauslaufs; und
- Figur 6:: eine Draufsicht auf einen im Auslaufkanal von Figur 5 vorhandenen Klemmring.

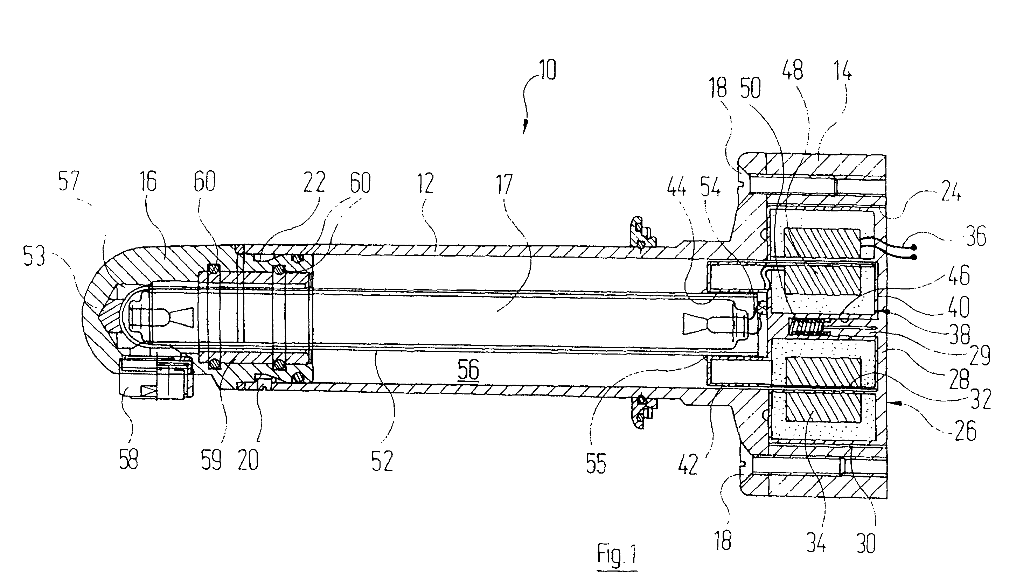

Zunächst wird auf Figur 1 Bezug genommen: In dieser ist ein Wannenauslauf mit einer Einrichtung zum Entkeimen von Wasser insgesamt mit dem Bezugszeichen 10 gekennzeichnet. Er umfaßt einen hohlzylindrischen Gehäusemantel 12, der an seinem rechten, der nicht dargestellten Gebäudewand benachbarten Ende an einem ringförmigen Montagesockel 14 mittels Schrauben 18 befestigt und an seinem gegenüberliegenden Ende durch einen teilweise in ihn eingeschobenen abnehmbaren Auslaufkopf 16 verschlossen ist.

Der Auslaufkopf 16 ist am Gehäusemantel 12 durch eine diesen durchdringende Madenschraube 20 fixiert, welche in eine Umfangsnut 22 am Auslaufkopf 16 eingreift.

Im Gehäusemantel 12 ist koaxial eine UV-Strahlungsquelle mit einer UV-Lampe 17 angeordnet.

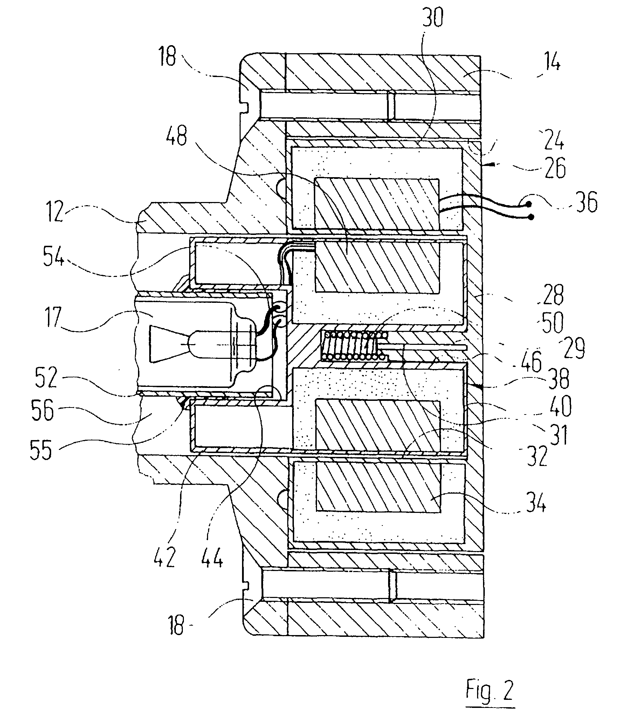

Der Montagesockel 14 weist eine zentrische Durchgangsbohrung 24 auf, in welche mit geringem Spiel ein den stationären Anschlußsockel bildendes Aufnahmeteil 26 eingesetzt ist. Wie besonders gut aus Figur 2 ersichtlich ist, besteht dieser zur Gebäudewand hin aus einer Basis 28, an welche ein von der Gebäudewand wegzeigender Zapfen 29 angeformt ist, und einem ebenfalls von der Gebäudewand wegzeigenden ringförmigen Kragen 30, so daß eine zum Gehäusemantel 12 offene, kreisförmige Ausnehmung 32 gebildet wird, welche denselben Innendurchmesser aufweist wie der Gehäusemantel 12. In den Kragen 30 ist eine erste Spule 34 eingekapselt, die als Primärwicklung eines Transformators dient. Sie ist über Leitungen 36 mit einer externen, nicht dargestellten Stromquelle verbunden.

In die Ausnehmung 32 ist der Sockelbereich der UV-Lampe 17, der die Form eines Anschlußsockel-Teiles 38 besitzt, unter geringem Spiel eingesetzt. Das Anschlußsockel-Teil 38 umfaßt einen der Basis 28 des Aufnahmeteiles 26 benachbarten Boden 40 und einen Kragen 42, welcher eine sich in den Innenraum des Gehäusemantels 12 öffnende kreiszylindrische Aufnahmeöffnung 44 begrenzt. Von der der Basis 28 des Aufnahmeteiles 26 benachbarten Stirnfläche des Bodens 40 her ist in diesen eine zu dem Anschlußsockel-Teil 38 koaxiale Sackbohrung 46 eingebracht, dessen Tiefe größer ist als die Länge des Zapfens 29. Im Boden 40 des Anschlußsockel-Teiles 38 ist in der Nähe seiner äußeren Mantelfläche eine zweite Spule 48 verkapselt, welche als Sekundärwicklung des bereits erwähnten Transformators dient.

Zwischen der Grundfläche der Sackbohrung 46 und dem gestuften Kopf des Zapfens 29 ist eine Druckfeder 50 angeordnet, welche in dem in den Figuren 1 und 2 dargestellten Zustand maximal komprimiert ist.

In die Aufnahmeöffnung 44 ist das Ende eines Glaskolbens 52 z.B. mit Epoxidharz 55 eingegossen, welcher mit seinem offenen Ende, welches in den Figuren 1 und 2 nach rechts zeigt, über die UV-Lampe 17 geschoben ist und sich mit seinem geschlossenen Ende in der in Figur 1 gezeigten Funktionsstellung über ein Anschlagteil 53 am Auslaßkopf 16 abstützt. Die UV-Lampe 17 ist über Leitungen 54 mit der zweiten Spule 48 des besagten Transformators verbunden.

Zwischen dem Glaskolben 52 und dem Gehäusemantel 12 ist ein ringförmiger Behandlungsraum 56 gebildet, welcher auf in den Figuren 1 und 2 nicht näher dargestellte Weise im Bereich des Montagesockels 14 mit einem Wasserzulauf und im Bereich des Auslaufkopfes 16 mit einem Auslaufraum 57 kommuniziert, an welchen ein Wasserauslauf in Form eines Luftsprudlers 58 angeschlossen ist.

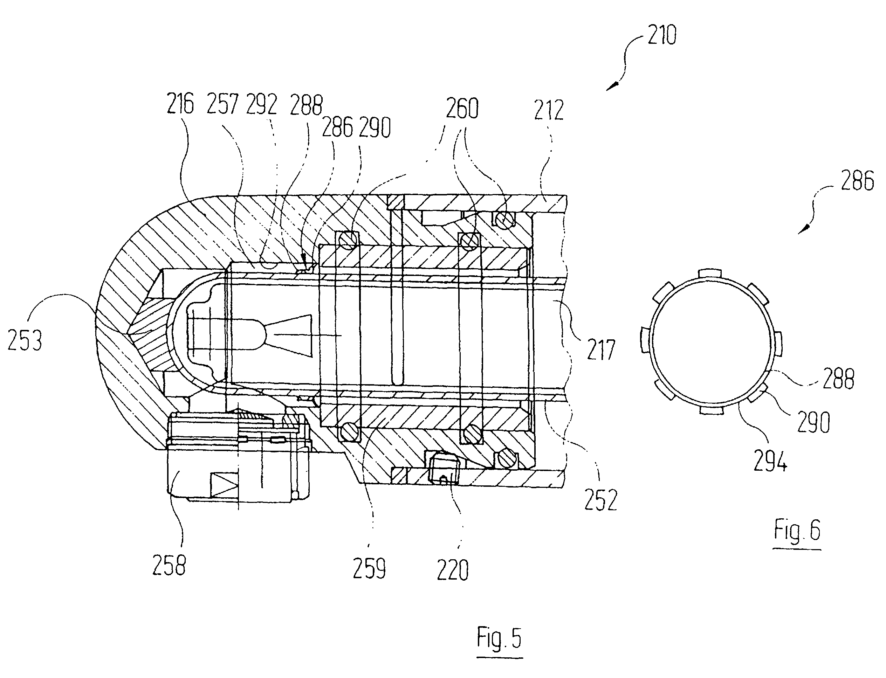

In eine Erweiterung des nach rechts in der Zeichnung offenen Auslaufkopfes 16 ist ein Glasrohrstück 59 eingeschoben, welches den Glaskolben 52 auf einem Stück seiner axialen Länge umgibt (auf das Glasrohrstück 59 wird weiter hinten im Zusammenhang mit den Figuren 5 und 6 eingegangen). Das Glasrohrstück 59 ist gegen den Auslaufkopf 16 und dieser gegen den Gehäusemantel 12 in üblicher Weise durch O-Ringe 60 abgedichtet.

Der oben beschriebene Wannenauslauf 10 wird folgendermaßen betrieben:

Wird ein in der Zeichnung nicht dargestelltes Ventil geöffnet, so strömt Wasser über den Wasserzulauf (nicht dargestellt) in den Behandlungsraum 56 zwischen Glaskolben 52 und Gehäusemantel 12. In diesem wird das Wasser insbesondere durch die UVC-Strahlung, welche von der eingeschalteten UV-Lampe 17 ausgeht, desinfiziert. Vor allem werden im Wasser befindliche Mikroorganismen, wie Einzeller oder Amöben, abgetötet. Vom Behandlungsraum 56 gelangt das desinfizierte Wasser in den Auslaufraum 57 und von dort zum Luftsprudler 58.

Der Wannenauslauf 10 wird, z.B. zum Austausch der UV-Lampe 17, folgendermaßen geöffnet:

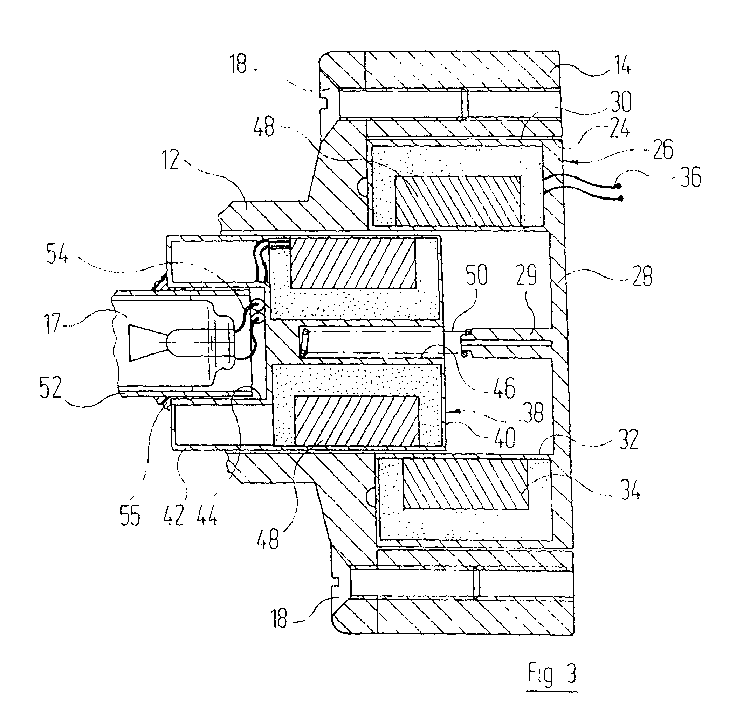

Zunächst wird die Madenschraube 20 gelöst. Nun wird der Auslaufkopf 16 in Figur 1 nach links vom Gehäusemantel abgezogen. Während des Abziehens des Auslaufkopfes 16 wird auch das Anschlagteil 53 mitbewegt, so daß nun die Druckfeder 50 das Anschlußsockel-Teil 38 vom Aufnahmeteil 26 in dem Maße wegdrückt, wie der Auslaufkopf 16 vom Gehäusemantel 12 wegbewegt wird. Dabei entfernt sich die zweite Spule 48 von der ersten Spule 34, so daß die in der zweiten Spule 48 induzierte Spannung abnimmt (diese Stellung ist in Figur 3 dargestellt). Sobald die Brennspannung der UV-Lampe 17 unterschritten ist, erlischt diese. Die Überlappung zwischen Auslaufkopf 16 und Gehäusemantel 12 ist mindestens so groß, daß dieses Erlöschen erfolgt, bevor der Auslaufkopf 16 vollständig vom Gehäusemantel 12 abgehoben ist. Somit ist gewährleistet, daß der Benutzer beim Abnehmen des Auslaufkopfes 16 keinesfalls der UVC-Strahlung der UV-Lampe 17 ausgesetzt ist, auch wenn er z.B. vergessen hat, die Stromzufuhr zur UV-Lampe 17 abzuschalten.

Das Anschlußsockel-Teil 38 wird von der Druckfeder 50 soweit vom Aufnahmeteil 26 weggedrückt, bis die Druckfeder 50 im wesentlichen entspannt ist. Nach dem vollständigen Abziehen des Auslaufkopfes 16 vom Gehäusemantel 12 kann der Benutzer den Glaskolben 52 greifen und die aus Glaskolben 52, UV-Lampe 17 und Anschlußsockel-Teil 38 bestehende Einheit aus dem Wannenauslauf 10 herausziehen.

Zum Einbau der UV-Lampe 17 wird zunächst der Auslaufkopf 16 über den Glaskolben 52 gestülpt, bis er mit dem Anschlagteil 53 am geschlossenen Ende des Glaskolbens 52 anliegt. Dann wird der Glaskolben 52 mit der UV-Lampe 17 und dem am offenen Ende des Glaskolbens 52 befestigten Anschlußsockel-Teil 38 in den Gehäusemantel 12 eingeführt. Da der Außendurchmesser des Anschlußsockel-Teiles 38 nur geringfügig kleiner ist als der Innendurchmesser des Gehäusemantels 12 und des Aufnahmeteiles 26, ist das Anschlußsockel-Teil 38 während des Einschiebens sicher geführt. Gegen Ende des Einführvorganges gelangt die zweite Spule 48 wieder in den Bereich der ersten Spule 34. Zu diesem Zeitpunkt ist jedoch der Auslaufkopf 16 mit seinem in Figur 1 rechten Ende bereits wieder zumindest teilweise in den Gehäusemantel 12 eingeschoben. Somit kann auch dann keine Strahlung von der UV-Lampe 17 nach außen gelangen und den Benutzer verletzen, wenn die in der zweiten Spule 48 induzierte Spannung ausreicht, um die UV-Lampe 17 zu zünden.

Wenn der Boden 40 des Anschlußsockel-Teiles 38 wieder in Anlage an der Basis 28 des Aufnahmeteiles 26 ist, wie in den Figuren 1 und 2 dargestellt, ist die Druckfeder 50 wieder maximal komprimiert. Das Anschlußsockel-Teil 38 wird in dieser Lage über den Glaskolben 52 und das als Gegenhalt arbeitende Anschlagteil 53 in dieser Position gehalten. Zum Schluß wird die Madenschraube 20 so eingeschraubt, daß sie in die Umfangsnut 22 des Auslaufkopfes 16 greift und diesen gegen ein Abziehen sichert.

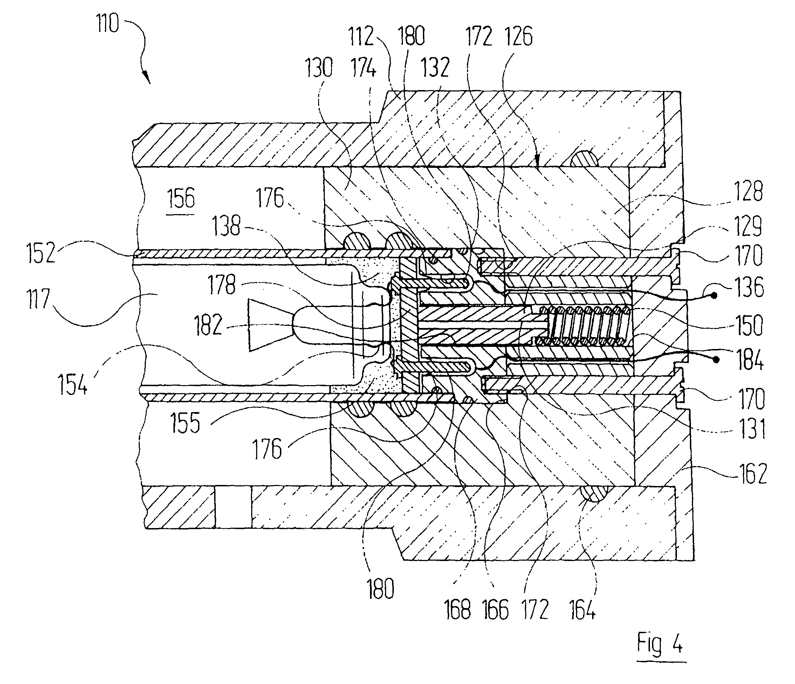

Nun wird auf Figur 4 Bezug genommen, in welcher der der Wand benachbarte Bereich eines zweiten Ausführungsbeispieles eines Wannenauslaufes 110 dargestellt ist. Entsprechende Teile sind in Figur 4 mit den gleichen Bezugszeichen wie in den Figuren 1 bis 3 zuzüglich 100 versehen. Auf sie wird nachfolgend nicht mehr im Detail eingegangen.

Der wesentliche Unterschied zum ersten Ausführungsbeispiel besteht darin, daß in dem Wannenauslauf 110 kein Transformator mit zwei Spulen vorgesehen und statt dessen die UV-Lampe 117 über eine Steckverbindung mit dem Wannenauslauf 110 verbunden ist. Diese Steckverbindung wird nun im einzelnen beschrieben:

Der Wannenauslauf 110 umfaßt eine Basis 162, welche in hier nicht näher interessierender Weise einerseits mit einer Gebäudewand (nicht dargestellt) verbunden ist und an welcher andererseits der Gehäusemantel 112 befestigt ist. In Figur 4 links von der Basis 162 ist ein zylindrisches Aufnahmeteil 126 angeordnet, welches einen Boden 128 und einen von der Basis 162 wegzeigenden Kragen 130 aufweist. Der Boden 128 des Aufnahmeteils 126 liegt an der Basis 162 an. Der Außendurchmesser des Aufnahmeteils 126 ist geringfügig kleiner als der Innendurchmesser des Gehäusemantels 112 und ist gegenüber diesem durch einen O-Ring 164 abgedichtet.

Der Kragen 130 begrenzt eine zylindrische Ausnehmung 132, in welcher ein ringförmiges Anschlußelement 168 aufgenommen ist. Das Anschlußelement 168 und das Aufnahmeteil 126 sind über Schrauben 170, welche durch Durchgangsbohrungen (ohne Bezugszeichen) in der Basis 162 und dem Aufnahmeteil 126 hindurchgehen und in Gewindebohrungen 172 im Anschlußelement 168 eingeschraubt sind, an der Basis 162 gehalten.

In der der UV-Lampe 117 zugewandten Stirnseite des Anschlußelementes 168 sind zwei als Steckbuchsen 174 ausgebildete Sackbohrungen eingebracht, welche mit metallischen, sich von der Wandfläche der Steckbuchsen 174 wegerstreckenden Federkontakten 176 versehen sind. Die Federkontakte 176 sind über Leitungen 136 mit einer externen Stromquelle (nicht dargestellt) verbunden.

Der Glaskolben 152 ist an dem in Figur 4 sichtbaren Ende durch eine Scheibe 178 verschlossen. Durch diese erstrecken sich von der UV-Lampe 117 weg nach außen zwei Kontaktstifte 180, deren Länge und Durchmesser so bemessen ist, daß sie mit den Steckbuchsen 174 und den Federkontakten 176 im Anschlußelement 168 zusammenarbeiten können.
Mit der UV-Lampe 117 sind die Kontaktstifte 180 über Leitungen 154 verbunden. Die UV-Lampe 117, der Glaskolben 152 und die Leitungen 154 sind mit Epoxidharz 155 vergossen.

Der in' Figur 4 sichtbare Rand des Glaskolbens 152 reicht über die Scheibe 178 hinaus und greift in eine in der Mantelfläche des Anschlußelementes 168 vorhandene Stufe 182 ein. Die Abdichtung des Glaskolbens 152 gegen das Aufnahmeteil 126 und gegen das Anschlußelement 168 sowie die Abdichtung des Anschlußelementes 168 gegen das Aufnahmeteil 126 erfolgt in der üblichen Weise durch O-Ringe (ohne Bezugszeichen).

Wie bereits oben dargelegt wurde, sind das Aufnahmeteil 126 und das Anschlußelement 168 ringförmig ausgebildet, weisen also jeweils koaxiale Ausnehmungen 182 bzw. 184 auf, deren Durchmesser identisch ist. In diese Ausnehmungen 182, 184 sind eine Druckfeder 150 und ein Zapfen 129 eingebracht. Die Druckfeder 150 stützt sich einerseits an der Basis 162 und andererseits an einem mit einer Stufe versehenen Ende des Zapfens 129 ab. Das andere Ende des Stößels 129 liegt in der in Figur 4 dargestellten Funktionsstellung an der Scheibe 178 an. In den Zapfen 129 ist eine koaxiale Durchgangsbohrung 131 eingebracht.

Das in Figur 4 nicht dargestellte auslaufseitige Ende des Wannenauslaufes 110 ist analog zu dem in Figur 1 dargestellten Ausführungsbeispiel aufgebaut. Wird also der Auslaufkopf analog zu der im Zusammenhang mit Figur 3 beschriebenen Vorgehensweise abgezogen, entspannt sich die Druckfeder 150 und drückt den Glaskolben 152 mit der UV-Lampe 117 über die Scheibe 178 und den Stößel 129 vom Anschlußelement 168 weg. Dabei gleiten die Kontaktstifte 180 aus den Steckbuchsen 174 und kommen so von den Federkontakten 176 frei. Somit ist die Stromzufuhr zu der UV-Lampe 117 unterbrochen. Dieser Zustand wird erreicht, bevor der Auslaufkopf vollständig vom Gehäusemantel abgezogen ist. Somit ist auch bei diesem Wannenauslauf 110 gewährleistet, daß beim Abziehen des Auslaufkopfes die UV-Lampe 117 erlischt und von ihr keine für den Benutzer schädliche UVC-Strahlung mehr ausgeht, bevor dieser den Auslaufkopf vollständig vom Gehäusemantel abgezogen hat.

Das Einführen der UV-Lampe 117 erfolgt in umgekehrter Reihenfolge. Dabei ermöglicht die koaxiale Durchgangsbohrung 131 im Zapfen 129, daß in der Ausnehmung 184 eventuell vorhandenes Wasser beim Komprimieren der Druckfeder 150 nach oben abfließen kann.

In Figur 5 ist der Auslaufbereich eines dritten Ausführungsbeispieles eines Wannenauslaufes 210 dargestellt. Entsprechende Teile sind mit den gleichen Bezugszeichen wie in den Figuren 1 bis 3 zuzüglich 200 versehen.

Der in Figur 5 dargestellte Auslaufbereich des Wannenauslaufs 210 unterscheidet sich von dem in Figur 1 dargestellten nur durch das zusätzliche Vorhandensein eines Klemmringes 286. Dieser liegt unter Preßsitz mit seiner zylindrischen Basis 288 an der Mantelfläche des Glaskolbens 252 an. Radiale Rastabschnitte 290 des Klemmringes 286 sind elastisch gegen eine Wand 292 des Auslaufkopfes 216 gespannt, und zwar genau im Bereich einer Stufe von der Wand 292 zum Glasrohrstück 259. Wie aus Figur 6 ersichtlich ist, sind zwischen den einzelnen Rastabschnitten 290 Durchlässe 294 vorhanden, durch welche das Wasser in den Auslaufraum 257 strömen kann.

Der in Figur 5 nicht dargestellte wandseitige Bereich des Wannenauslaufes 210 ist, bis auf einen Unterschied, gleich aufgebaut wie in Figur 4 dargestellt. Es kann nämlich auf eine Druckfeder und einen Stößel und somit auch auf die Durchgangsbohrungen im Aufnahmeteil und im Anschlußelement verzichtet werden.

Beim Abziehen des Auslaufkopfes 216 vom Gehäusemantel 212 z.B. zum Austausch eine defekten UV-Lampe 217 arbeitet die Stufe von der Wand 292 zum Glasrohrstück 259 mit den Rastabschnitten 290 des Klemmrings 286 im Sinne einer Sperre zusammen, so daß der Klemmring 286 mit dem Auslaufkopf 216 mitbewegt wird.

Das Material des Klemmringes 286 und die Kraft, mit welcher dessen Basis 288 auf dem Glaskolben 252 sitzt, sind so gewählt, daß beim Abziehen des Auslaufkopfes 216 vom Gehäusemantel 212 sich der Glaskolben 252 zumindest zunächst gemeinsam mit dem Klemmring 286 und somit mit dem Auslaufkopf 216 bewegt. Dies heißt, daß die Reibungskraft zwischen dem Klemmring 286 und dem Glaskolben 252 größer sein muß als die Reibungskraft zwischen den Kontaktstiften und den Federabschnitten in den Steckbuchsen. Durch die Bewegung des Glaskolbens 252 werden die Kontaktstifte aus den Steckbuchsen 174 herausgezogen und die Stromzufuhr zur UV-Lampe 217 unterbrochen. Auch hier ist also gewährleistet, daß beim Abziehen des Auslaufkopfes 216 vom Gehäusemantel 212 keine UVC-Strahlung zum Benutzer gelangt.

Zum Einbau wird zunächst der Glaskolben 252 mit der UV-Lampe 217 in den Auslaufkopf 216 geschoben, bis der Glaskolben 252 in Anlage an das Anschlagteil 253 kommt und die Rastabschnitte 290 des Klemmringes 286 hinter dem Glasrohrstück 259 einrasten. Nun wird der Glaskolben 252 in den Gehäusemantel 212 eingeführt. Die Überlappung zwischen Auslaufkopf 216 und dem auslaufseitigen Ende des Gehäusemantels 212 ist dabei so gewählt, daß der Auslaufkopf 216 in den Gehäusemantel 212 eingreift, bevor die Kontaktstifte in die Steckbuchsen gelangen. Hierdurch ist gewährleistet, daß auch beim Einbau keine UVC-Strahlung zum Benutzer gelangen kann.
¹ Translator's note: Passage 31, 131 is shown as a blind passage in the drawings but both the word used for it in the German ("Durchgangsbohrung" = bore passing through) and the mention in the paragraph at the top of page 4 of the description that it is intended as a means of escape for water suggest that it should be open at both ends.

## Patentansprüche

1. Einrichtung zum Entkeimen von Wasser mit
a) einem Gehäuse, welches einen Einlaß und einen Auslaß für das Wasser und einen abnehmbaren Gehäuseabschnitt (16, 216) aufweist; und
b) einer UV-Strahlungsquelle (17, 117, 217), die innerhalb des Gehäuses angeordnet und deren Strahlung auf das durchströmende Wasser gerichtet ist und welche in ihrem Sockelbereich (38, 138) elektrische Anschlußmittel (48, 180) zu ihrer Stromversorgung aufweist;
wobei
c) das Gehäuse einen stationären Anschlußsockel (26, 126) umfaßt, welcher zu den elektrischen Anschlußmitteln der UV-Strahlungsquelle komplementäre Anschlußmittel (34, 174) aufweist, die mit einer externen Stromquelle verbindbar sind;
d) die elektrischen Anschlußmittel im Sockelbereich der UV-Strahlungsquelle und die elektrischen Anschlußmittel im stationären Anschlußsockel in der Funktionsstellung der UV-Strahlungsquelle zueinander eng benachbart sind;
**dadurch gekennzeichnet, daß**
e) eine Einrichtung (29, 50; 129, 150; 286) vorgesehen ist, welche bei einer Relativbewegung des abnehmbaren Gehäuseabschnitts (16; 216) vom Anschlußsockel (26; 126) weg eine Relativbewegung des Sockelbereiches (38; 138) der UV-Strahlungsquelle (17; 117; 217) gegenüber dem Anschlußsockel (26; 126) bewirkt und so die Stromzufuhr zur UV-Strahlungsquelle (17; 117; 217) unterbricht.

2. Einrichtung nach Anspruch 1, **dadurch gekennzeichnet,**
**daß** die die Relativbewegung der UV-Strahlungsquelle (17; 117) bewirkende Einrichtung eine Druckfeder (50; 150) umfaßt, welche sich einerseits am Sockelbereich (38; 138) der UV-Strahlungsquelle (17; 117) und andererseits an einem stationären Gehäuseteil (28; 162) abstützt, wobei die UV-Strahlungsquelle (17; 117) sich in der Funktionsstellung mit ihrem von der Druckfeder (50; 150) abgewandten Ende am abnehmbaren Gehäuseabschnitt (16) abstützt.

3. Einrichtung nach Anspruch 2, **dadurch gekennzeichnet,**
**daß** sich die Druckfeder (50; 150) mit einem Ende an einem Zapfen (29; 129) abstützt und beide in der Funktionsstellung der UV-Strahlungsquelle (17; 117) in einer Bohrung (46; 182) im Sockelbereich (38) der UV-Strahlungsquelle (17) oder im stationären Anschlußsockel (128) angeordnet sind.

4. Einrichtung nach Anspruch 3, **dadurch gekennzeichnet,**
**daß** der Zapfen (29; 129) einen koaxialen Durchgangskanal (31; 131) aufweist.

5. Einrichtung nach Anspruch 3 oder 4, **dadurch gekennzeichnet, daß** der Zapfen (29) am stationären Anschlußsockel (26) angeformt ist.

6. Einrichtung nach Anspruch 3 oder 4, **dadurch gekennzeichnet, daß** der Zapfen am Sockelbereich der UV-Strahlungsquelle angeformt ist.

7. Einrichtung nach Anspruch 1, **dadurch gekennzeichnet,**
**daß** die die Relativbewegung der UV-Strahlungsquelle (217) bewirkende Einrichtung eine Klemmeinrichtung (286) umfaßt, welche einerseits mit der UV-Strahlungsquelle (217) und andererseits mit dem abnehmbaren Gehäuseabschnitt (216) zusammenarbeitet, wobei die Haltekraft zwischen Klemmeinrichtung (286) und UV-Strahlungsquelle (217) bzw. Gehäuseabschnitt (216) größer ist als jene zwischen den elektrischen Anschlußmitteln.

8. Einrichtung nach Anspruch 7, **dadurch gekennzeichnet,**
**daß** die Klemmeinrichtung einen Klemmring (286) umfaßt, welcher mit seiner Basis (288) mit der UV-Strahlungsquelle (217) im Preßsitz zusammenarbeitet und mit radialen Rastabschnitten (290) gegen den abnehmbaren Gehäuseabschnitt (216) verspannt ist.

9. Einrichtung nach einem der Ansprüche 1 bis 8, **dadurch**
**gekennzeichnet, daß** die elektrischen Anschlußmittel im Anschlußsockel (26) des Gehäuses als Primärwicklung (34) und die elektrischen Anschlußmittel um Sockelbereich (38) der UV-Strahlungsquelle (17) als Sekundärwicklung (48) einer Induktionsanordnung ausgebildet sind.

10. Einrichtung nach Anspruch 9, **dadurch gekennzeichnet,**
**daß** die einen elektrischen Anschlußmittel eine Ausnehmung (32) aufweisen und die entsprechende Wicklung (34) um diese Ausnehmung (32) herum angeordnet ist, und daß die hierzu komplementären elektrischen Anschlußmittel in der Funktionsstellung der UV-Strahlungsquelle (17) mit ihrer Wicklung (48) in die Ausnehmung (32) eingeführt sind.

11. Einrichtung nach Anspruch 9 oder 10, **dadurch gekennzeichnet, daß** die Wicklungen (34, 48) verkapselt sind.

12. Einrichtung nach einem der Ansprüche 1 bis 6, **dadurch**
**gekennzeichnet, daß** die einen elektrischen Anschlußmittel als Steckbuchsen (174) und die hierzu komplementären elektrischen Anschlußmittel als Kontaktstifte (180) ausgebildet sind, welche im eingebauten Zustand mit den Steckbuchsen (174) zusammenarbeiten.

13. Einrichtung nach Anspruch 12, **dadurch gekennzeichnet,**
**daß** die Steckbuchsen (174) Federabschnitte (176) aufweisen, welche im eingebauten Zustand gegen die Kontaktstifte (180) drücken.

14. Einrichtung nach einem der Ansprüche 2 bis 13, **dadurch**
**gekennzeichnet, daß** die UV-Strahlungsquelle eine UV-Lampe (17; 117; 217) umfaßt, welche von einem für UVC-Strahlung durchlässigen Glaskolben (52; 152; 252) umgeben ist.

15. Einrichtung nach Anspruch 14, **dadurch gekennzeichnet,**
**daß** der Glaskolben (52; 152) mit dem Sockelbereich der UV-Strahlungsquelle (17; 117) vergossen ist.

16. Einrichtung nach einem der vorhergehenden Ansprüche,
**dadurch gekennzeichnet, daß** das Gehäuse das Auslaufgehäuse einer sanitären Auslaufarmatur (10) ist.

## Claims

1. Device for disinfecting water having
(a) a housing which has an inlet and an outlet for the water and a detachable section (16, 216), and
(b) a source of UV radiation (17, 117, 217) which is arranged inside the housing and whose radiation is directed onto the water flowing through and which has in its base region (38, 138) means (48, 180) for electrical connection to its power supply,
wherein
(c) the housing comprises a fixed connecting base (26, 126) having connecting means (34, 174), complementary to the means for electrical connection of the source of UV radiation, which can be connected to an external power source,
(d) the means for electrical connection in the base region of the source of UV radiation and the means for electrical connection in the fixed connecting base are closely adjacent to one another when the source of UV radiation is in the operating position,
**characterised in that**
(e) an arrangement (29, 50; 129, 150; 286) is provided which, at the time of a relative movement of the detachable housing section (16; 216) away from the connecting base (26; 126) causes a relative movement of the base region (38; 138) of the source of UV radiation (17; 117; 217) in relation to the connecting base (26; 126) and thus interrupts the supply of power to the source of UV radiation (17; 117; 217).

2. Device according to claim 1, **characterised in that** the arrangement which causes the relative movement of the source of UV radiation (17; 117) comprises a compression spring (50; 150) which is supported at one end on the base region (38; 138) of the source of UV radiation (17; 117) and at the other end on a fixed part (28; 162) of the housing, the source of UV radiation (17; 117) being supported in its operating position on the detachable section (16) of the housing by its end remote from the compression spring (50; 150).

3. Device according to claim 2, **characterised in that** the compression spring (50; 150) is supported at one end on a spigot (29; 129) and when the source of UV radiation (17; 117) is in its operating position both are arranged in a bore (46; 182) in the base region (38) of the source of UV radiation (17) or in the fixed connecting base (128).

4. Device according to claim 3, **characterised in that** the spigot (29; 129) has a co-axial passage (31; 131) passing through it¹.

5. Device according to claim 3 or 4, **characterised in that** the spigot (29) is integrally formed on the fixed connecting base (26)

6. Device according to claim 3 or 4, **characterised in that** the spigot is integrally formed on the base region of the source of UV radiation.

7. Device according to claim 1, **characterised in that** the arrangement which causes the relative movement of the source of UV radiation (217) comprises a clamping device (286) which co-operates on the one hand with the source of UV radiation (217) and on the other with the detachable housing section (216), the holding force between the clamping device (286) and the source of UV radiation (217) and housing section (216) being greater than that between the means of electrical connection.

8. Device according to claim 7, **characterised in that** the clamping means comprises a clamping ring (286); the base (288) of which co-operates with the source of UV radiation (217) in a press fit and which is tensed against the detachable housing section (216) by radial engaging sections (290).

9. Device according to one of claims 1 to 8, **characterised in that** the means of electrical connection in the connecting base (26) of the housing is in the form of a primary winding (34) of an induction arrangement and the means of electrical connection in the base region (38) of the source of UV radiation (17) is in the form of a secondary winding (48) of the arrangement.

10. Device according to claim 9, **characterised in that** one means of electrical connection has a recess (32) and the relevant winding (34) is arranged around this recess (32) and the means of electrical connection complementary thereto has its winding (48) inserted in the recess (32) when the source of UV radiation (17) is in its operating position.

11. Device according to claim 9 or 10, **characterised in that** the windings (34, 48) are encapsulated.

12. Device according to one of claims 1 to 6, **characterised in that** one means of electrical connection is in the form of sockets (174) and the means of electrical connection complementary thereto is in the form of contact pins (180) which co-operate with the sockets (174) in the interfitted state.

13. Device according to claim 12, **characterised in that** the sockets (174) have resilient sections (176) which press against the contact pins (180) in the interfitted state.

14. Device according to one of claims 2 to 13, **characterised in that** the source of UV radiation comprises a UV lamp (17; 117; 217) which is surrounded by a glass envelope (52; 152; 252) permeable to UVC radiation.

15. Device according to claim 14, **characterised in that** the glass envelope (52; 152) is sealed to the base region of the source of UV radiation (17; 117).

16. Device according to one of the foregoing claims, **characterised in that** the housing is the outlet housing of a sanitary outlet fitting (10).

## Revendications

1. Dispositif pour stériliser de l'eau comprenant
a) un boîtier présentant une entrée et une sortie pour l'eau et une partie (16, 216) amovible, et
b) une source de rayonnement UV (17, 117, 217) placée à l'intérieur du boîtier, dont le rayonnement est dirigé vers l'eau qui circule à travers le boîtier et qui présente dans son culot (38, 138) des moyens de raccordement électrique (48, 180) permettant de l'alimenter en courant,
sachant que
c) le boîtier comprend un socle de raccordement fixe (26, 126) qui présente des moyens de raccordement (34, 174) complémentaires aux moyens de raccordement électrique de la source de rayonnement UV, qui peuvent être reliés à une source de courant externe,
d) les moyens de raccordement électrique au niveau du culot de la source de rayonnement UV et les moyens de raccordement électrique dans le socle de raccordement fixe sont très proches l'un de l'autre lorsque la source de rayonnement UV est en position de fonctionnement, **caractérisé en ce que**
e) un dispositif (29, 50 ; 129, 150 ; 286) est prévu, qui, lors d'un mouvement relatif de la partie amovible (16, 216) du boîtier qui éloigne cette dernière du socle de raccordement (26, 126), provoque un mouvement relatif du culot (38, 138) de la source de rayonnement UV (17 ; 117 ; 217) par rapport au socle de raccordement (26 ; 126) et interrompt ainsi l'alimentation en courant de la source de rayonnement UV (17 ; 117 ; 217).

2. Dispositif selon la revendication 1, **caractérisé en ce que** le dispositif provoquant le mouvement relatif de la source de rayonnement UV (17 ; 117) comprend un ressort de pression (50 ; 150) prenant appui, d'une part, dans le culot (38 ; 138) de la source de rayonnement UV (17 ; 117) et, d'autre part, dans une partie de boîtier fixe (28 ; 162), sachant que, lorsqu'elle est en position de fonctionnement, la source de rayonnement UV (17 ; 117) prend appui sur la partie de boîtier amovible (16) avec son extrémité opposée au ressort de pression (50 ; 150).

3. Dispositif selon la revendication 2, **caractérisé en ce que** le ressort de pression (50 ; 150) prend appui sur un tenon (29 ; 129) avec une extrémité et **en ce que**, lorsque la source de rayonnement UV (17 ; 117) est en position de fonctionnement, les deux sont logés dans un perçage (46 ; 182) dans le culot (38) de la source de rayonnement UV (17) ou dans le socle de raccordement fixe (126).

4. Dispositif selon la revendication 3, **caractérisé en ce que** le tenon (29 ; 129) présente un passage coaxial (31 ; 131).

5. Dispositif selon la revendication 3 ou 4, **caractérisé en ce que** le tenon (29) est ménagé sur le socle de raccordement fixe (26).

6. Dispositif selon la revendication 3 ou 4, **caractérisé en ce que** le tenon est ménagé sur le culot de la source de rayonnement UV.

7. Dispositif selon la revendication 1, **caractérisé en ce que** le dispositif provoquant le mouvement relatif de la source de rayonnement UV (217) comprend un dispositif de serrage (286) qui coopère, d'une part, avec la source de rayonnement UV (217) et, d'autre part, avec la partie de boîtier amovible (216), sachant que la force de serrage entre le dispositif de serrage (286) et la source de rayonnement UV (217) ou la partie de boîtier (216) est supérieure à celle existant entre les moyens de raccordement électrique.

8. Dispositif selon la revendication 7, **caractérisé en ce que** le dispositif de serrage comprend une bague de serrage (286) dont la base (288) coopère avec un ajustement serré avec la source de rayonnement UV (217) et qui est immobilisée à l'aide de segments d'enclenchement radiaux (290) par rapport à la partie de boîtier amovible (216).

9. Dispositif selon l'une des revendications 1 à 8, **caractérisé en ce que** les moyens de raccordement électrique dans le socle de raccordement (26) du boîtier et les moyens de raccordement électrique dans le culot (38) de la source de rayonnement UV (17) sont respectivement réalisés en tant que bobinage primaire (34) et bobinage secondaire (48) d'un dispositif à induction.

10. Dispositif selon la revendication 9, **caractérisé en ce qu'**une partie des moyens de raccordement électrique présentent un évidement (32) et le bobinage (34) correspondant est disposé autour de cet évidement (32), et **en ce que**, lorsque la source de rayonnement UV (17) est en position de fonctionnement, les moyens de raccordement électrique complémentaires aux précédents sont introduits avec leur bobinage (48) dans l'évidement (32).

11. Dispositif selon la revendication 9 ou 10, **caractérisé en ce que** les bobinages (34, 48) sont encapsulés.

12. Dispositif selon l'une des revendications 1 à 6, **caractérisé en ce qu'**une partie des moyens de raccordement électrique sont réalisés en tant que contacts femelles (174) et les moyens de raccordement électrique complémentaires aux précédents, en tant que contacts mâles (180) qui, à l'état monté, coopèrent avec les contacts femelles (174).

13. Dispositif selon la revendication 12, **caractérisé en ce que** les contacts femelles (174) présentent des segments à ressort (176) qui, à l'état monté, appuient sur les contacts mâles (180).

14. Dispositif selon l'une des revendications 2 à 13, **caractérisé en ce que** la source de rayonnement UV comprend une lampe UV (17 ; 117 ; 217) qui est entourée par une ampoule de verre (52 ; 152 ; 252) perméable aux rayons UVC.

15. Dispositif selon la revendication 14, **caractérisé en ce que** l'ampoule de verre (52 ; 152) est scellée au culot de la source de rayonnement UV (17 ; 117).

16. Dispositif selon l'une des revendications précédentes, **caractérisé en ce que** le boîtier est le boîtier de sortie d'une armature sanitaire (10).
